Europäisches Patentamt

(19) **European Patent Office**

**Office européen des brevets**

(11) Numéro de publication: **0 180 693**
**A2**

(12) # DEMANDE DE BREVET EUROPEEN

(21) Numéro de dépôt: **84830349.1**

(22) Date de dépôt: **18.12.84**

(51) Int. Cl.⁴: **F 24 H 9/20**

(30) Priorité: **02.11.84 IT 2342684**

(43) Date de publication de la demande:
**14.05.86 Bulletin 86/20**

(84) Etats contractants désignés:
**BE DE FR GB**

(71) Demandeur: **Lainati, Roberto**
**Via Rothpletz 2/4**
**I-28025 Gravellona Toce Novara(IT)**

(72) Inventeur: **Lainati, Roberto**
**Via Rothpletz 2/4**
**I-28025 Gravellona Toce Novara(IT)**

(74) Mandataire: **Pinna, Mario**
**Dr. Mario Pinna Piazza Maria Adelaide 5**
**I-20129 Milano(IT)**

(54) **Connecteur pour brancher automatiquement sur une ligne distributrice d'énergie électrique une cha udière a usage domestique équipee des moyens de chauffage électriques.**

(57) Connecteur permettant de brancher automatiquement sur une ligne distributrice d'énergie électrique une petite chaudière (16) pourvue à son intérieur de moyens de chauffage reliés à deux broches (20) faisant saillie verticalement du fond de ladite chaudière. Cet ensemble se compose d'une "partie fixe" logée dans un corps en caisson approprié (1-2) destiné à être posé sur une surface horizontale, et d'une "partie amovible" comprenant une base (15') à bord cylindrique (15) relevé, destinée à se fixer au fond de ladite chaudière. La partie fixe comporte deux équipages de contact (3,4) mobiles, qui sont séparés normalement desdites broches (20) mais susceptibles de venir se mettre automatiquement en contact avec ces broches lorsque sur la partie fixe du connecteur vient se superposer la partie amovible de celui-ci. L'ensemble est équipé d'un thermostat (11).

FIg.4

Croydon Printing Company Ltd

./...

Fig.6

CONNECTEUR POUR BRANCHER AUTOMATIQUEMENT SUR UNE LIGNE DI-
STRIBUTRICE D'ENERGIE ENECTRIQUE UNE CHAUDIERE A USAGE DO-
MESTIQUE EQUIPEE DE MOYENS DE CHAUFFAGE ELECTRIQUES.

La présente invention concerne un connecteur pour brancher automatiquement sur une ligne distributrice d'énergie électrique une chaudiére à usage domestique équipée de moyens de chauffage électriques.

Plus précisément, la présente invention est relative à un connecteur destiné à appuyer sur une surface horizontale pour servir de support à une chaudière à usage ménager et pour brancher d'une manière automatique sur une ligne d'alimentation d'énergie électrique ladite chaudière dont les moyens de chauffage électriques incorporés sont reliés à deux broches qui passent, dans une condition opportunément isolée, à trevers le fond de la chaudière pour faire saillie verticalement de ce fond.

La présente invention a principalement pour objet de réaliser un connecteur électrique tel que spécifié ci-dessus, dans lequel les éléments conducteurs destinés à venir se mettre en contact avec les broches dépassant verticalement du fond de la chaudière, sont établis de telle façon que lorsque la chaudière n'est pas utilisée lesdits éléments conducteurs occupent une position pour laquelle ils sont matériellement inaccessibles, tandis que lesdits éléments conducteurs ne peuvent prendre automatiquement leur position de travail établissant le contact

0180693

électrique avec lesdites broches, que lorsque la chaudière est utilisée, comme cela est axpliqué au mieux par la suite.

Un autre objet de l'invention est de réaliser un connecteur électrique dans lequel des moyens sont prévus pour interrompre le circuit électrique du dispositif de chauffage incorporé dans la chaudière lorsque la temperature du liquide contenu dans celle-ci tend à dépasser une valeur préétablie.

Le connecteur formant l'objet de la présente invention se compose de deux parties, notamment une " partie fixe " qui est destinée à appuyer d'une manière permanente sur une surface horizontale, et une " partie amovible " qui est destinée à être fixée au fond métallique d'une chaudière, duquel fond font verticalement saillie vers l'extérieur deux broches qui, comme déjà mentionné, passent à travers ledit fond pour se relier, à l'intérieur de la chaudière, avec les moyens de chauffage électriques logés dans celle-ci.

La partie fixe du connecteur comprend, essentiellement, un corps en caisson en cylindre tronqué, de directrice préférablement circulaire, dans lequel corps sont montés dans une condition dûment isolée, symétriquement par rapport à un plan idéal diamétral et à une certaine distance de ce plan, deux équipages de contact mobiles lesquels sont assujettis à l'effet de moyens élastiques qui tendent à maintenir lesdits équipages dans une position sensiblement espacée et divergente l'un par rapport à l'autre.

Monté dans le même corps en caisson se trouve un dispositif thermo-rupteur (thermostat) lequel, sous la poussée exercée de bas en haut par un moyen élastique approprié, fait légèrement saillie sur le dessus dudit corps à travers une ouverture ménagée à cet effet dans celui-ci; en plus de ladite ouverture, le corps en caisson comporte au moins deux trous traversants

- 3 -

0180693

circulaires et au moins deux trous traversants rectangulaires ménagés dans la partie de base supérieure dudit corps en caisson.

La " partie mobile" du connecteur comprend, d'une maniére essentielle, un corps en forme d'une cylindre tronqué creux fermé en haut par une partie de base (destinée à être assurée au fond de la chaudière) et ouvert du côté opposé, ledit corps creux ayant une directrice telle qu'elle permet à ladite partie amovible d'être superposée audit corps en caisson de la " partie fixe "; la face de la partie amovible qui est opposée à celle faisant contact avec le fond de la chaudière, porte fixée sur elle, d'une maniére symétrique par rapport à un plan idéal diamétral dudit corps, deux tiges verticales, de section rectangulaire, qui se terminent par une partie plane inclinée; en outre, ménagés dans ladite partie de base, d'une manière symétrique par rapport audit plan idéal diamétral et à une tertaine distance de celui-ci, se trouvent prévus deus trous traversants circulaires (destinés à permettre le passage des broches faisant saillie du fond de la chaudière); enfin, formée au milieu de ladite partie de base se trove une large auverture à travers laquelle le thermostat logé dans la partie fixe du connecteur peut appuyer contre le fond métallique de la chaudière.

Moyennant la superposition de la partie amovible du connecteur sur la partie fixe de celui-ci, on obtient de faire déplacer les équipages de contact logés dans cette partie fixe, jusqu'à ce qu'ils viennent en appui contre les broches faisant saillie du fond de la chaudière, ce qui a pour résultat que le liquide contenu dans la chaudière commence à se chauffer et continue à se chauffer jusqu'à un moment où la température dudit liquide ayant atteint une valeur préétablie, ou tendant à dépasser cette valeur, le thermostat

0180693

associé à la partie fixe du connecteur entre en fonction pour interrompre le circuit électrique d'alimentation. Il est évident que cette interruption a pour conséquence une réduction en température du liquide dans la chaudière qui a pour effet de rétablir la continuité du circuit électrique.

Les caractéristiques du connecteur formant l'objet de l'invention sont exposées plus en détail dans la description qui suit et pour l'intelligence de laquelle on se référera aux dessins annexés qui montrent, à titre d'exemple non limitatif, un mode de mise en oeuvre préféré et dont:

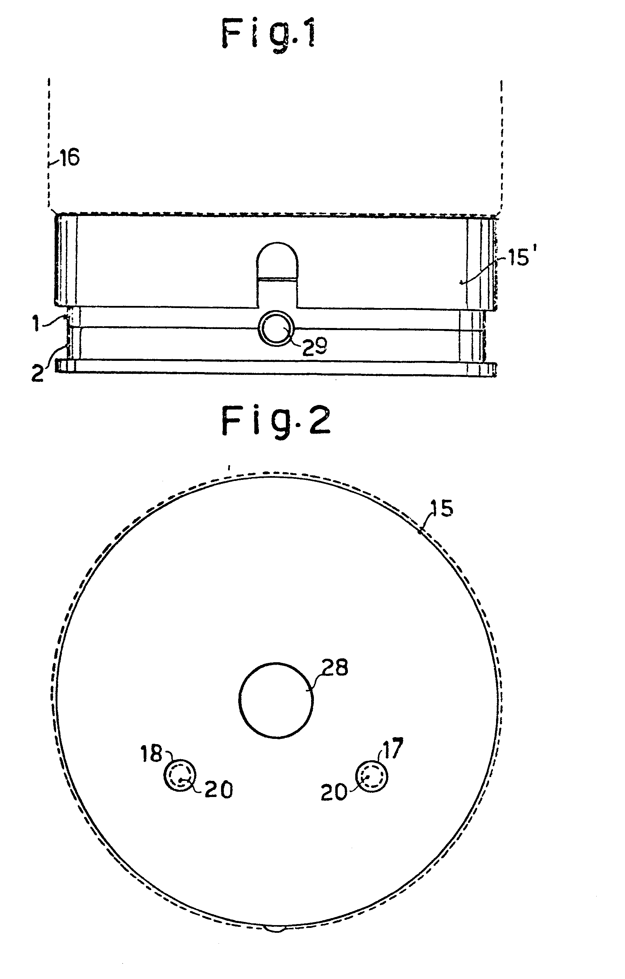

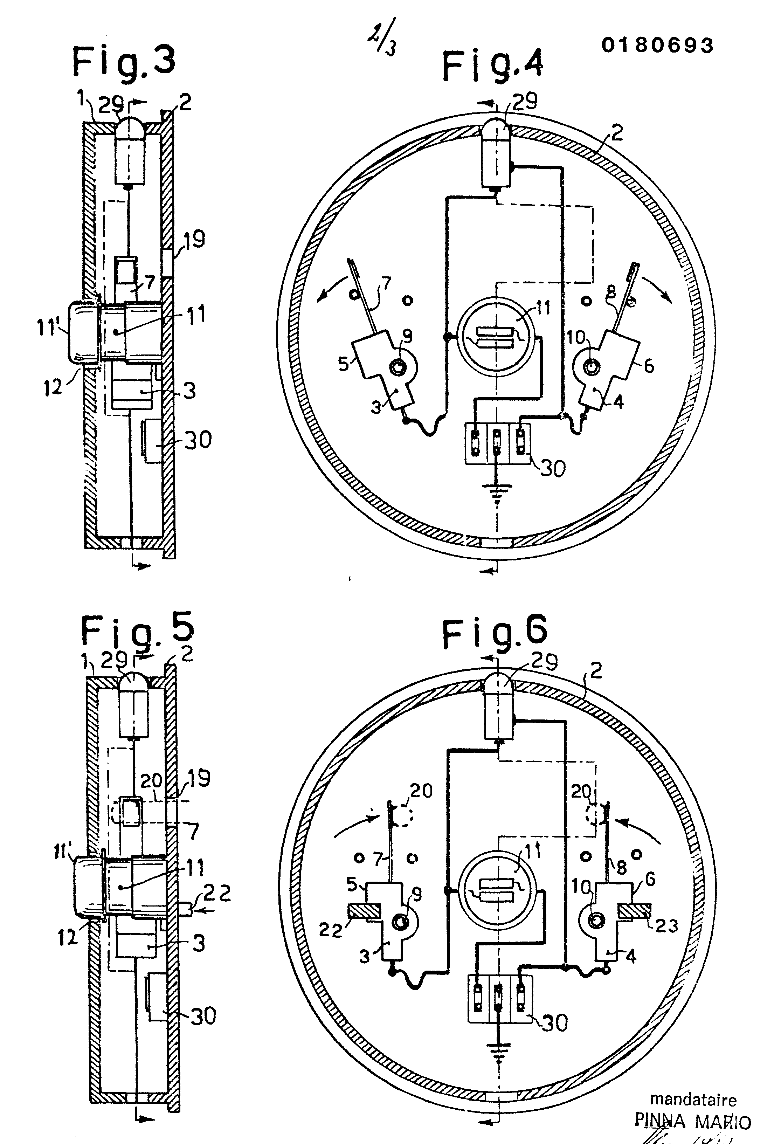

- La figure 1 est une vue en élévation du connecteur selon l'invention dont la partie fixe est partiellement insérée dans la partie amovible, la chaudière étant fixée à cette dernière, comme cela est représenté d'une manière très schématique en traits de ligne;

- La figure 2 montre la partie amovible dudit connecteur vue par la haut;

- Les figures 3 et 4 sont des vues en coupe illustrant d'une manière très schématique la " partie fixe " du connecteur dans sa position au repos (· circuit électrique ouvert);

- Les figures 5 et 6 sont des vues en coupe illustrant d'une manière très schématique la " partie fixe " du connecteur lorsqu'en position de travail (circuit électrique fermé);

- Les figures 7, 8 et 9 sont des vues en coupe illustrant la partie amovible du connecteur selon l'invention.

Dans les différentes figures, les parties égales sont désignées par les mêmes chiffres de référence.

Aussi, dans lesdites figures, on a représenté par des traits de ligne une partie de la chaudière et les broches faisant verticalement saillie de celle-ci.

Comme on l'a dit plus haut, le connecteur selon la présente invention ee compose de deux parties, plus précisément il se compose d'une partie fixe qui est destinée à appuyer en permanence sur une surface horizontale, et d'une partie amovible qui est destinée à être fixée (à l'aide de vis, par exemple) au fond préférablement plat d'une chaudière à usage domestique (par exemple, une chaudière associée à une machine à faire le café express), fond duquel sont verticalement saillie deux broches métalliques qui traversent ledit fond (dont ces broches sont convenablement isolées) pour se raccorder aux moyens de chauffage électriques logés dans ladite chaudière.

La partie fixe du connecteur (figures 3,4,5,6) comprend un corps en caisson 1-2 de forme cylindrique tronquée et de directrice préférablement circulaire. Montés dans ce corps, d'une manière symétrique par rapport à un plan idéal diamétral, se trovent deux équipages de contact 3,4 isolés convenablement et symétriquement identiques l'un par rapport à l'autre et dont chacun est constitué par un élément sensiblement prismatique porvu latéralement d'un appendice en saillie 5,6, comportant une lame en forme de bande 7,8 et articulé, dans le plan, sur un axe 9,10 vertical, lesdits équipages de contact 3,4 étant soumis à l'effet de moyens en forme de ressorts (non visibles sur les dessins) qui les obligent à maintenir au repos leurs lames 7,8 dans une position divergente ou, de toute façon, espacée l'une de l'autre,comme le montre au mieux  figure 4.

Un thermo-rupteur 11 (par exemple en forme d'un bimétal, connu en soi) est monté dans une région sensiblement au milieu du corps en caisson 1-2 et est soumis à la poussée qu'exerce sur lui un moyen élastique, non illustré, qui tend à le faire dépasser en partie  à travers une ouverture 12, de la face supérieure dudit corps en caisson, comme cela se voit clairement aux figures 3 et 5.

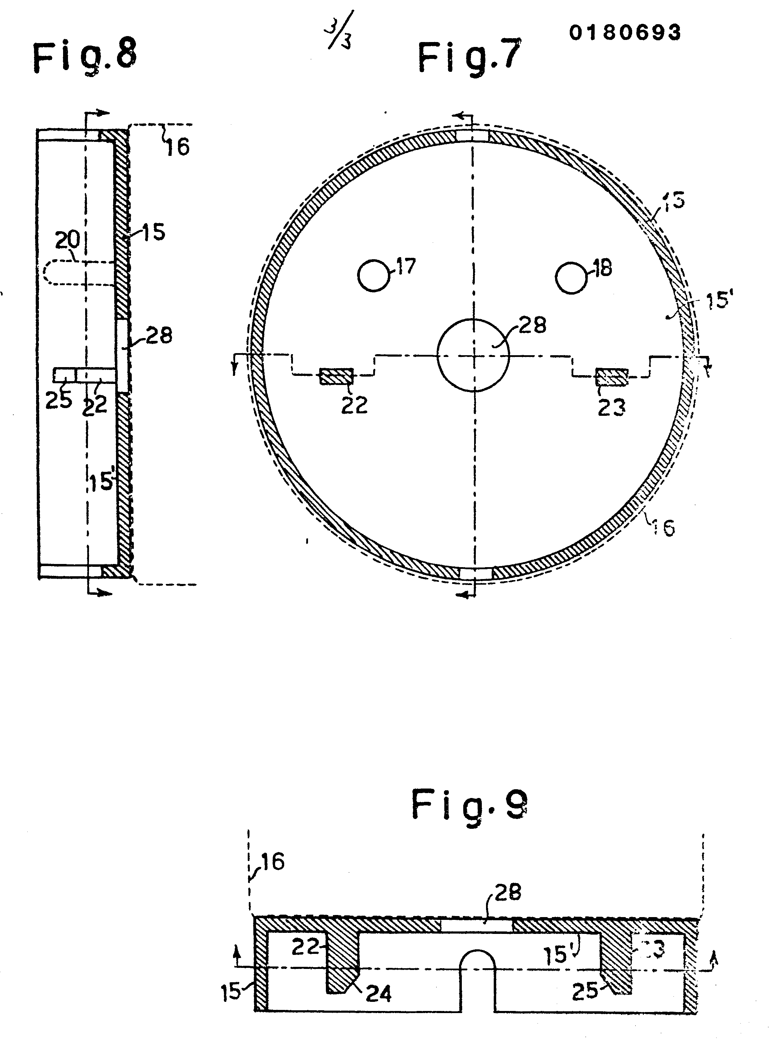

La partie amovible du connecteur (figures 7,8,9) comprend un corps cylindrique tronqué creux 15 fermé en haut par une base 15' destinée à se fixer sur le dessous d'une chaudière 16 (indiquée partiellement en traits de ligne) et ouvert du côté opposé, ledit corps cylindrique tronqué creux ayant une directrice telle qu'elle permet à ce corps d'être superposé au corps en caisson 1-2.

Deux trous traversants 17,18 sont ménagés dans la base 15' d'une manière symétrique par rapport à un plan idéal diamétral, et la position de ces trous est telle que ces trous viennent coincider exactement avec des trous, tels que figurés par 19, ménagés dans le corps en caisson 1-2 de la partie fixe, lesdits trous permettant le passage de broches, telles que celles figurées par 20, qui font verticalement saillie du fond de la chaudière.

Deux tiges verticales 22, 23 de section rectangulaire,sont fixées d'une manière symétrique par rapport au plan idéal diamétral susmentionné sur la face du corps 15 qui est opposée à celle faisant contact avec le fond plat de la chaudière. Les tiges 22,23 se terminent par une rampe 24,25 et les positions des deux dites tiges sont telles que ces tiges coincident exactement avec les trous rectangulaires ménagés dans la partie supérieure du corps en caisson 1-2 de la partie fixe, et qu'elles se situent dans le même axe que les appendices 5,6 faisant saillie latéralement des éléments prismatiques porteurs des lames 7,8.

D'une manière essentielle, la conformation et disposition particuliére desdites tiges 22,23 a pour but de provoquer, par l'insertion du corps en caisson 1-2 (partie fixe) dans le corps en cylindre tronqué creux 15 (partie amovible),l'interaction des rampes 24,25 avec les appendices 5,6 des équi-

0180693

pages de contact 3,4, ce qui a pour résultat de faire basculer lesdits équipages autour de leurs axes 9,10 (comme le montre au mieux figure 6) et, en conséquence de cause, d'établir le contact électrique des lames 7, 8 avec les broches 20 faisant verticalement saillie de la chaudière 16.

En plus des trous traversants 17,18, la base 15'est pourvue d'une large ouverture circulaire 28 qui a pour but de permettre au thermo-rupteur 11 de faire saillie par cette ouverture pour venir appuyer contre le dessous de la chaudière, de sorte que ledit dispositif est à même d'interrompre le circuit électrique alimentant les moyens de chauffage de ladite chaudière dès que la température du liquide contenu dans celle-ci tend à dépasser une valeur preétablie.

Enfin, le connecteur est équipé d'un voyant 29, qui s'allume lorsque l'appareil passe d'une position au repos à une position de travail, et d'une planche à bornes comune 30 permettant le raccordement au réseau de distribution d'énergie électrique.

Le schéma des connexions du connecteur selon l'invention est figuré par des lignes épaissies sur les dessins.

Ainsi qu'on peut le constater facilement d'un examen de ce schéma , alors que l'équipage de contact 4 est branché en permanence sur la ligne d'alimentation en énergie électrique (ligne qui est supposée comme étant reliée à la planche à borne 30), l'équipage de contact 3 n'est branché sur cette ligne que lorsque le thermo-rupteur 11 est enclenché, ce qui est indiqué par le voyant 29 allumé.

Selon un mode de mise en oeuvre préféré, les éléments 1 et 2 du corps en caisson formant la partie fixe, et l'élément 15-15 formant la partie mobile son réalisés à partir d'une matiére plastique synthétique à haut degré de résistance à la chaleur.

1)- Connecteur pour brancher automatiquement sur une ligne distributrice d'énergie électrique, une chaudière (16) pourvue à son intérieur de moyens de chauffage reliés à deux bro-. ches (20) (dûment isolées) qui dépassent verticalement du fond de la chaudière, caractérisé en ce qu'il se compose:

a)- d'une"partie fixe", destinée à être posée sur une surface horizontale et comprenant un corps en caisson (1-2) en cylindre tronqué creux, dans lequel corps se logent deux équipages (3,4) de contact mobiles qui sont maintenus, sous l'effet de moyens élastiques, dans une position sensiblement divergente ou, de toutes façon, espacée l'un de l'autre, et un thermostat (11) assujetti à l'action d'un moyen élastique qui tend à lui faire occuper une position pour laquelle ce thermostat fait saillie verticalement à travers une large ouverture ménagée dans la partie supérieure dudit corps en caisson (1-2), et

b)- d'une "partie amovible", constituée par un corps en cylindre tronqué creux (15) fermé en haut par une base (15') destinée à se fixer contre le dessous de la chaudière (16) et ouvert en bas, avec deux tiges (22,23) faisant saillie verticalement vers l'intérieur de ladite base (15') et se terminant chacune par une rampe (24,25); ladite base (15') étant pourvue en outre de deux trous (17,18) permettant le passage à travers ces trous desdites broches (20) faisant saillie verticalement du fond de la chaudière (16), ainsi que d'une large ouverture (28) qui permet le passage dudit thermostat (11) faisant saillie verticalement hors dudit corps en caisson (1-2).

2)- Connecteur selon la revendication 1, caractérisé en ce que chacun des équipages de contact (3,4) est l'image symétriquement identique de l'autre, et chacun d'eux est constitué par un élément sensiblement prismatique en matière isolante, qui comprend un appendice (5,6) faisant saillie latéralement et une lame en forme de ruban (7,8) et qui est articulé, dans le plan, sur un axe (9,10) vertical; les deux dits
éléments étant obligés, sous l'action d'un moyen élastique,
à maintenir leurs lames en rubans (7,8) dans une position
sensiblement divergente l'une de l'autre.

3)- Connecteur selon les revendications 1 et 2, caractérisé
en ce que tandis qu'un équipage de contact (4) est branché
en permanence sur un conducteur d'une ligne distributrice
d'énergie électrique, l'autre équipage de contact (3) n'est
branchè sur l'autre conducteur de ladite ligne que lorsque
le thermo-rupteur (11) est enclenché.

0180693

# Fig.1

16

15'

1

29

2

# Fig.2

15

28

18
20

17
20

mandataire
PINNA MARIO

Fig.3

Fig.4

1/3

0180693

Fig.5

Fig.6

mandataire
PINNA MARIO

# Fig.8

# Fig.7

# Fig.9

mandataire
PINNA MARIO